# EUROPEAN PATENT APPLICATION

(11) **EP 4 768 238 A1**
(43) Date of publication of application: **01.07.2026**
(21) Application number: 25867308.6
(22) Date of filing: 18.07.2025
(51) Int. Cl.: B30B 3/04, B30B 15/30, B30B 15/08, H01M 50/531

(54) **MOLDING DEVICE**

(30) Priority: 30.09.2024 KR 20240133279
(71) Applicant: LG ENERGY SOLUTION, LTD., Seoul 07335 (KR)
(72) Inventor: JEONG, Geon Wi, Seoul 07335 (KR)
(74) Representative: Goddar, Heinz J.
(86) International application number: PCT/KR2025/010655
(87) International publication number: WO 2026/071432

(57) **Abstract**

The present disclosure relates to a forming apparatus for shaping first and second foil tabs formed at two ends of a cylindrical electrode assembly, the forming apparatus including a rail unit configured to move the electrode assembly in a direction, and a guide unit disposed on the rail unit and configured to place the electrode assembly in position, the guide unit including a first plate facing the first foil tab and moving in a direction toward or away from the first foil tab, and a first guide portion disposed on the first plate and configured to bend the first foil tab.

## Description

### TECHNICAL FIELD

### CROSS-REFERENCE TO RELATED APPLICATIONS

This application is based on and claims priority from Korean Patent Application No. 10-2024-0133279 filed on September 30, 2024 with the Korean Intellectual Property Office, the disclosure of which is incorporated herein by reference.

### TECHNICAL FIELD

The present disclosure relates to a forming apparatus, and more particularly, to a forming apparatus for foil tab shaping with improved efficiency and completeness to reduce the cost spent on the forming process and simplify the structure.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Attention is directed to secondary batteries as an energy source for a variety of products including mobile devices and electric vehicles. Secondary batteries are regarded as an energy source that can replace the use of the existing products using fossil fuels, and because secondary batteries do not produce any by-product from the use of energy, they are attracting attention as an eco-friendly energy source.

A secondary battery may include electrodes, a separator and tabs, and the tab may be configured to connect the electrode of the secondary battery to an external circuit. A tab forming process may be needed to ensure that the tab facilitates the flow of electric current efficiently and has a stable structure.

### DISCLOSURE

### TECHNICAL PROBLEM

The present disclosure is designed to solve the above-described problems, and therefore the present disclosure is directed to providing a forming apparatus for foil tab shaping with improved efficiency and completeness to reduce the cost spent on the forming process and simplify the structure.

### TECHNICAL SOLUTION

A forming apparatus for shaping first and second foil tabs formed at two ends of a cylindrical electrode assembly according to an embodiment of the present disclosure may include a rail unit configured to move the electrode assembly in a direction, and a guide unit disposed on the rail unit and configured to place the electrode assembly in position, the guide unit including a first plate facing the first foil tab and moving in a direction toward or away from the first foil tab, and a first guide portion disposed on the first plate and configured to bend the first foil tab.

The guide unit may further include a second plate facing the second foil tab and moving in a direction toward or away from the second foil tab, and a second guide portion disposed on the second plate and configured to bend the second foil tab.

In the direction in which the first and second plates move, the first and second plates may have a circular shape and the first and second guide portions may be arranged in a radial shape.

The first and second guide portions may bend a part of the first and second foil tabs so that the first and second foil tabs may increase in thickness toward a center of the electrode assembly.

The first guide portion may include a plurality of triangular shapes with decreasing height toward a center of the first plate.

The forming apparatus may further include a rotation unit spaced apart from the guide unit in said direction and configured to rotate the electrode assembly to shape the first and second foil tabs. The rotation unit may include an upper roller disposed on the electrode assembly, and a forming pin configured to shape the first and second foil tabs.

The rotation unit may further include a guide frame where the upper roller and the forming pin are installed, and a transporter configured to move the guide frame in a direction toward or away from the electrode assembly.

The forming pin may include a first surface secured to the guide frame, a second surface extending from the first surface in a direction away from the guide frame, the second surface being linear in said direction, and a third surface extending from the first surface in the direction away from the guide frame and connected to the second surface, at least a part of the third surface being curved in said direction.

Boundary surfaces of the first to third surfaces of the forming pin may be filleted.

The third surface of the forming pin may include a first extension portion extending from the first surface toward the second surface, a second extension portion extending from the first extension portion toward the second surface with a steeper slope than the first extension portion with respect to the first surface, and a third extension portion extending from the second extension portion and connected to the second surface, and at least a part of the first to third extension portions may include a curved surface.

The rotation unit may further include a lower roller disposed under the electrode assembly.

The forming apparatus may further include a pressing unit spaced apart from the rotation unit in said direction and configured to press the electrode assembly. The pressing unit may include a first press plate facing the first foil tab and moving in a direction toward or away from the first foil tab, and a first core pin disposed on the first press plate and protruding toward a center of the first foil tab.

The pressing unit may further include a second press plate facing the second foil tab and moving in a direction toward or away from the second foil tab, and a second core pin disposed on the second press plate and protruding toward a center of the second foil tab.

The first and second press plates may press the first and second foil tabs in a length direction of the electrode assembly.

The first and second core pins may shape central portions of the first and second foil tabs.

### ADVANTAGEOUS EFFECTS

The forming apparatus according to the present disclosure includes the guide unit, the rotation unit and the pressing unit excluding an ultrasonic unit, thereby reducing the cost spent on the forming process and simplify the structure of the forming apparatus. As the components of the ultrasonic unit are omitted, the management elements of the forming process may be reduced, thereby achieving more efficient foil tab shaping. Furthermore, the foil tab shaped by the forming process of the guide unit, the rotation unit and the pressing unit may have improved completeness.

### BRIEF DESCRIPTION OF THE DRAWINGS

FIG. 1 is a perspective view of a forming apparatus according to an embodiment of the present disclosure.
FIG. 2 is a cross-sectional view of section A in FIG. 1.
FIG. 3 is a diagram showing the shape of a first plate (or a second plate) and a first guide portion (or a second guide portion) of a guide unit according to an embodiment of the present disclosure.
FIG. 4 is a cross-sectional view of section B in FIG. 1.
FIG. 5 is a perspective view of a forming pin according to an embodiment of the present disclosure.
FIG. 6 is a cross-sectional view of section C in FIG. 1.
FIG. 7 is a perspective view of a first press plate (or a second press plate) and a first core pin (or a second core pin) according to an embodiment of the present disclosure.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

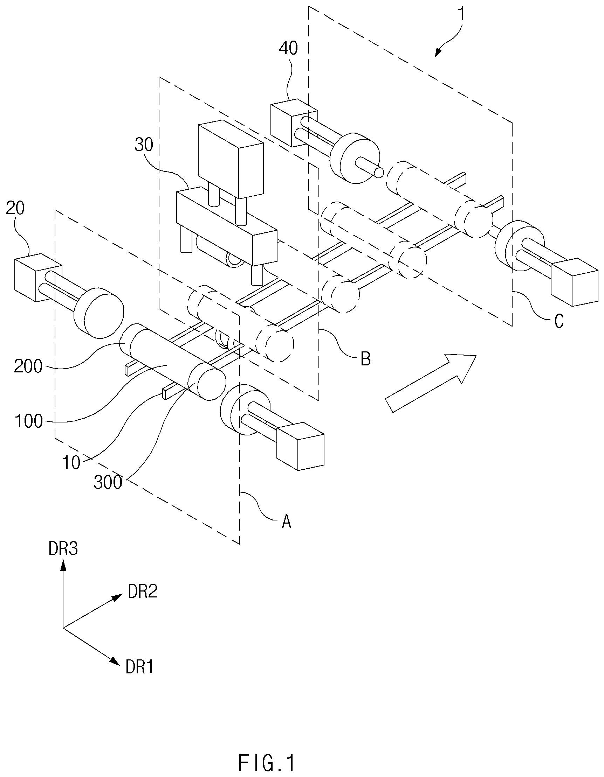

FIG. 1 is a perspective view of a forming apparatus 1 according to an embodiment of the present disclosure.

Referring to FIG. 1, first and second foil tabs 200, 300 may be formed at two ends of a cylindrical electrode assembly 100 (hereinafter, the electrode assembly). The first foil tab 200 may extend from the electrode assembly 100 in a direction opposite to a first direction DR1, and the second foil tab 300 may extend from the electrode assembly 100 in the first direction DR1. The forming apparatus 1 of the present disclosure is an apparatus for shaping the first and second foil tabs 200, 300 formed at the two ends of the electrode assembly 100. In this specification, the first to third directions DR1, DR2, DR3 are provided by way of illustration and are not limited thereto.

The forming apparatus 1 may include a rail unit 10, a guide unit 20, a rotation unit 30 and a pressing unit 40.

The rail unit 10 may move the electrode assembly 100 in any one direction. For example, the rail unit 10 may move the electrode assembly 100 at a predetermined interval along the second direction DR2.

The guide unit 20 may be disposed on the rail unit 10 and place the electrode assembly 100 in position. For example, the guide unit 20 may place the electrode assembly 100 in a correct position on the rail unit 10. In addition, the guide unit 20 may bend (or shape) at least a part of the first and second foil tabs 200, 300.

The rotation unit 30 may be spaced apart from the guide unit 10 in a direction (for example, the second direction DR2) and rotate the electrode assembly 100 to shape the first and second foil tabs 200, 300.

The pressing unit 40 may be spaced apart from the rotation unit 30 in a direction (for example, the second direction DR2) and press the electrode assembly 100 into shape.

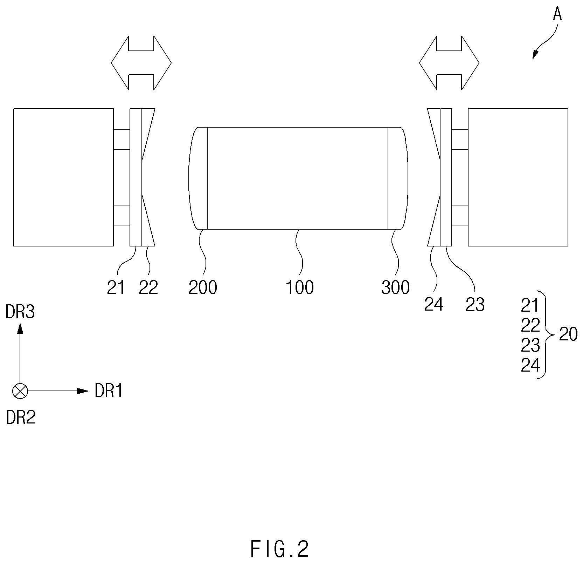

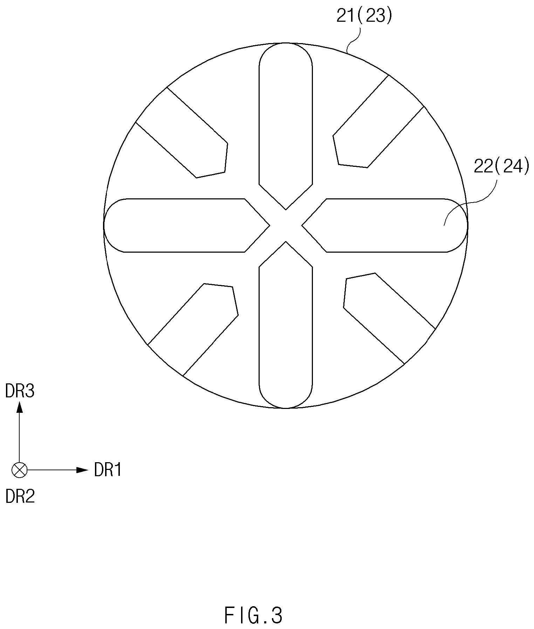

FIG. 2 is a cross-sectional view of section A in FIG. 1. FIG. 3 is a diagram showing the shape of a first plate 21 (or a second plate 22) and a first guide portion 22 (or a second guide portion 22) of the guide unit 20 according to an embodiment of the present disclosure. FIG. 2 shows a cross section of the guide unit 20 when viewed from the second direction DR2, and FIG. 3 shows the shape of the first plate 21 (or the second plate 22) and the first guide portion 22 (or the second guide portion 22) when viewed from a direction parallel to the first direction DR1. In describing FIGS. 2 and 3, reference is made to FIG. 1, and description of the same reference numeral is omitted.

Referring to FIGS. 2 and 3, the guide unit 20 may include the first plate 21, the first guide portion 22, the second plate 23 and the second guide portion 24.

The first plate 21 may face the first foil tab 200 and move in a direction toward or away from the first foil tab 200 (for example, in the direction parallel to the first direction DR1). The first guide portion 22 may be disposed on the first plate 21 and bend (or shape) the first foil tab 200.

The second plate 23 may face the second foil tab 300 and move in a direction toward or away from the second foil tab 300 (for example, in the direction parallel to the first direction DR1). The second guide portion 24 may be disposed on the second plate 23 and bend (or shape) the second foil tab 300.

According to an embodiment of the present disclosure, as the first and second plates 21, 23 move, the first and second guide portions 22, 24 may shape the first and second foil tabs 200, 300. The shaping of the first and second foil tabs 200, 300 by the two guide portions 22, 24 may achieve more efficient foil tab shaping than shaping of the first and second foil tabs 200, 300 by more than two guide portions.

In the direction in which the first and second plates 21, 23 move, the first and second plates 21, 23 may each have a circular shape, and the first and second guide portions 22, 24 may be arranged in a radial shape. For example, the movement direction of the first and second plates 21, 23 may be a direction facing the first and second plates 21, 23 in the direction parallel to the first direction DR1, respectively.

The first guide portion 22 may include a plurality of triangular shapes with decreasing height toward the center of the first plate 21. The second guide portion 24 may include a plurality of triangular shapes with decreasing height toward the center of the second plate 23. The first and second guide portions 22, 24 of which the area close to the edges of the plates 21, 23 has a larger thickness may bend (or shape) the part of the first and second foil tabs 200, 300 so that the first and second foil tabs 200, 300 may increase in thickness toward the center of the electrode assembly 100. Accordingly, the electrode assembly 100 having undergone the process of the guide unit 20 of the present disclosure may have the first and second foil tabs 200, 300 that curve outward in the middle.

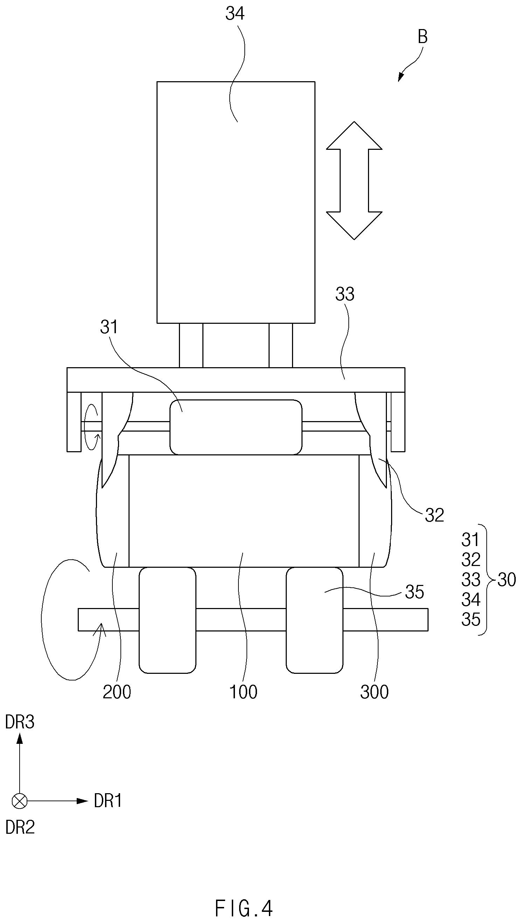

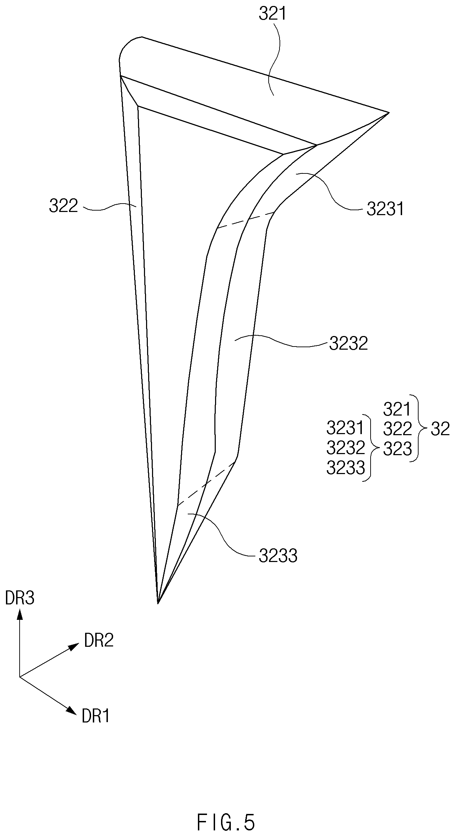

FIG. 4 is a cross-sectional view of section B in FIG. 1. FIG. 5 is a perspective view of a forming pin 32 according to an embodiment of the present disclosure. FIG. 4 shows a cross section of the rotation unit 30 when viewed from the second direction DR2. In describing FIGS. 4 and 5, reference is made to FIG. 1, and description of the same reference numeral is omitted.

Referring to FIGS. 4 and 5, the rotation unit 30 may include an upper roller 31, the forming pin 32, a guide frame 33, a transporter 34 and a lower roller 35.

The upper roller 31 may be disposed on the electrode assembly 100. The upper roller 31 may contact the electrode assembly 100 on the electrode assembly 100 and rotate the electrode assembly 100. The lower roller 35 may be disposed under the electrode assembly 100. The lower roller 35 may contact the electrode assembly 100 under the electrode assembly 100 and rotate the electrode assembly 100. The upper roller 31 and/or the lower roller 35 may be rotated by a motor. In an embodiment, one upper roller 31 may be provided and two lower rollers 35 may be provided. The upper roller may be located at the central portion of the electrode assembly, and the two lower rollers may be located at two sides on the basis of the central portion.

The forming pin 32 may shape first and second foil tabs 200, 300 formed at the two ends of the rotating electrode assembly 100. The forming pin 32 may have a specific shape and form the first and second foil tabs 200, 300 into a shape that conforms to the shape of the forming pin 32. At least a part of the first and second foil tabs 200, 300 that have been moved by the rail unit 10 may be bent at a predetermined angle by the guide unit 20. The forming pin 32 may additionally shape the first and second foil tabs 200, 300 bent by the guide unit 20.

The forming pin 32 may include a first surface 321, a second surface 322 and a third surface 323. The first surface 321 may be secured to the guide frame 33. The second surface 322 may extend from the first surface 321 in a direction away from the guide frame 33 and have a straight line shape in a direction. For example, in FIG. 5, the second surface 322 may extend from the first surface 321 in a direction in which the first direction DR1 and a direction opposite to the third direction DR3 cross and have a straight line shape when viewed from the second direction DR2. The third surface 323 may extend from the first surface 321 in the direction away from the guide frame 33 and be connected to the second surface 322. At least a part of the third surface 323 may be curved in a direction. For example, in FIG. 5, the third surface 323 may extend from the first surface 321 in a direction in which the direction opposite to the first direction DR1 and the direction opposite to the third direction DR3 cross and be connected to the second surface 322.

The boundary surfaces of the first to third faces 321, 322, 323 of the forming pin 32 may be filleted. The filleted forming pin 32 may prevent the foil tabs 200, 300 from tearing when shaping the rotating first and second foil tabs 200, 300. That is, the fixed forming pin may prevent the foil tabs 200, 300 from tearing when shaping the rotating first and second foil tabs 200, 300.

The third surface 323 of the forming pin 32 may include a first extension portion 3231, a second extension portion 3232 and a third extension portion 3233. The first extension portion 3231 may be defined as a portion extending from the first surface 321 toward the second surface 322. The second extension portion 3232 may extend from the first extension portion 3231 toward an end of the second surface 322 with a steeper slope than the first extension portion 3231 with respect to the first surface 321. That is, the angle of the second extension portion 3232 with respect to the first surface 321 may be larger than the angle of the first extension portion 3231 with respect to the first surface 321. The third extension portion 3233 may be defined as a portion extending from the second extension portion 3232 and connected to the second surface 322. The third extension portion 3233 may extend with a gentler slope than the second extension portion 3232 with respect to the first surface 321. That is, the angle of the third extension portion 3233 with respect to the first surface 321 may be smaller than the angle of the second extension portion 3232 with respect to the first surface 321.

At least a part of the first to third extension portions 3231, 3232, 3233 may include a curved surface. FIG. 5 shows that the area adjacent to the boundary between the first extension portion 3231 and the second extension portion 3232 and the area adjacent to the boundary between the second extension portion 3232 and the third extension portion 3233 have a curved surface.

The upper roller 31 and the forming pin 32 may be installed at the guide frame 33. The guide frame 33 include an upper surface and sides extending from the upper surface. A rod that is rotated by the motor may be coupled to the two sides of the guide frame 33, and the upper roller 31 coupled to the rod may be rotated. The forming pin 32 may be installed at the upper surface of the guide frame 33, and the rod of the upper roller 31 may be installed through the forming pin 32.

The transporter 34 may move the guide frame 33 in a direction toward or away from the electrode assembly 100. That is, the transporter 34 may move the guide frame 33 in a direction parallel to the third direction DR3.

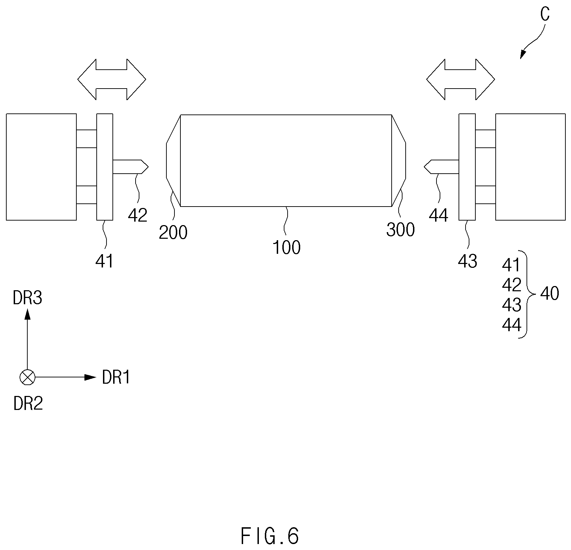

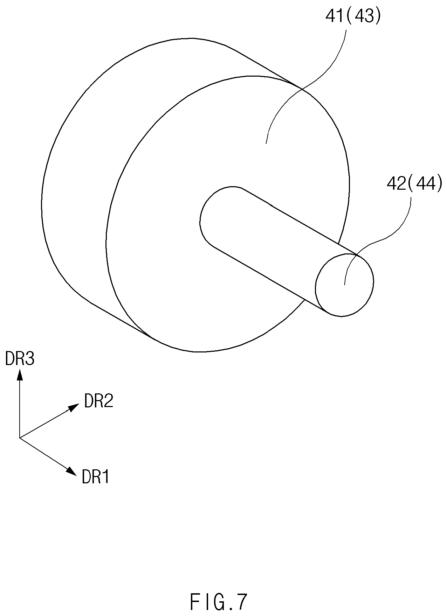

FIG. 6 is a cross-sectional view of section C in FIG. 1. FIG. 7 is a perspective view of a first press plate 41 (or a second press plate 43) and a first core pin 42 (or a second core pin 44) according to an embodiment of the present disclosure. FIG. 6 shows a cross section of the pressing unit 40 when viewed from the second direction DR2. In describing FIGS. 6 and 7, reference is made to FIG. 1, and description of the same reference numeral is omitted.

Referring to FIGS. 6 and 7, the pressing unit 40 may include the first press plate 41, the first core pin 42, the second press plate 43 and the second core pin 44.

The first press plate 41 may face the first foil tab 200 and move in the direction toward or away from the first foil tab 200 (for example, in the direction parallel to the first direction DR1). The first core pin 42 may be disposed on the first press plate 41 and protrude toward the center of the first foil tab 200. The first core pin 42 may press the central portion of the first foil tab 200 into shape.

The second press plate 43 may face the second foil tab 300 and move in the direction toward or away from the second foil tab 300 (for example, in the direction parallel to the first direction DR1). The second core pin 44 may be disposed on the second press plate 43 and protrude toward the center of the second foil tab 300. The second core pin 44 may press the central portion of the second foil tab 300 into shape.

The first and second press plates 41, 43 may press the first and second foil tabs 200, 300 in the length direction of the electrode assembly 100. For example, in FIG. 6, the first and second press plates 41, 43 may press the first and second foil tabs 200, 300 in the direction parallel to the first direction DR1. In the direction in which the first and second press plates 41, 43 move, the first and second press plates 41, 43 may each have a circular shape. The movement direction of the first and second press plates 41, 43 may be a direction facing the first and second press plates 41, 43 in the direction parallel to the first direction DR1.

Referring to FIGS. 1 to 7, as opposed to the existing forming apparatus, the forming apparatus 1 of the present disclosure may include the rail unit 10, the guide unit 20, the rotation unit 30 and the pressing unit 40, excluding an ultrasonic unit. The ultrasonic unit used to shape foil tabs requires high cost, needs a space for installing the components of the ultrasonic unit and has complexity in design. Because the ultrasonic unit is omitted, the forming apparatus 1 of the present disclosure may reduce the cost spent on the forming process and simplify the structure of the forming apparatus. In addition, the existing forming apparatus including the ultrasonic unit needs to adjust the lifespan of the components of the ultrasonic unit and the process parameters, but the forming apparatus of the present disclosure may precisely shape the foil tabs by the guide unit 20, the rotation unit 30 and the pressing unit 40, not the ultrasonic unit, thereby achieving foil tab shaping with higher efficiency and completeness.

Although the present disclosure has been hereinabove described with regard to a certain number of embodiments and drawings, the present disclosure is not limited thereto, and the present disclosure may be embodied in different forms by persons having ordinary skill in the technical field pertaining to the present disclosure within the technical scope of the present disclosure and the appended claims and their equivalents.

### [List of Reference Numerals]

1: Forming apparatus
10: Rail unit
20: Guide unit
21, 23: First and second plates
22, 24: First and second guide portions
30: Rotation unit
31: Upper roller
32: Forming pin
33: Guide frame
34: Transporter
35: Lower roller
40: Pressing unit
41, 43: First and second press plates
42, 44: First and second core pins
100: Electrode assembly
200, 300: First and second foil tabs

## Claims

1. A forming apparatus for shaping first and second foil tabs formed at two ends of a cylindrical electrode assembly, the forming apparatus comprising:
a rail unit configured to move the electrode assembly in a direction; and
a guide unit disposed on the rail unit and configured to place the electrode assembly in position, the guide unit including a first plate facing the first foil tab and moving in a direction toward or away from the first foil tab, and a first guide portion disposed on the first plate and configured to bend the first foil tab.

2. The forming apparatus according to claim 1,
wherein the guide unit further includes:
a second plate facing the second foil tab and moving in a direction toward or away from the second foil tab; and
a second guide portion disposed on the second plate and configured to bend the second foil tab.

3. The forming apparatus according to claim 2,
wherein in the direction in which the first and second plates move, the first and second plates have a circular shape and the first and second guide portions are arranged in a radial shape.

4. The forming apparatus according to claim 2,
wherein the first and second guide portions bend at least a part of the first and second foil tabs so that the first and second foil tabs increase in thickness toward a center of the electrode assembly.

5. The forming apparatus according to claim 1,
wherein the first guide portion includes a plurality of triangular shapes with decreasing height toward a center of the first plate.

6. The forming apparatus according to claim 1, further comprising:
a rotation unit spaced apart from the guide unit in said direction and configured to rotate the electrode assembly to shape the first and second foil tabs,
wherein the rotation unit includes:
an upper roller disposed on the electrode assembly; and
a forming pin configured to shape the first and second foil tabs.

7. The forming apparatus according to claim 6,
wherein the rotation unit further includes:
a guide frame where the upper roller and the forming pin are installed; and
a transporter configured to move the guide frame in a direction toward or away from the electrode assembly.

8. The forming apparatus according to claim 7,
wherein the forming pin includes:
a first surface secured to the guide frame;
a second surface extending from the first surface in a direction away from the guide frame, the second surface being linear in said direction; and
a third surface extending from the first surface in the direction away from the guide frame and connected to the second surface, at least a part of the third surface being curved in said direction.

9. The forming apparatus according to claim 8,
wherein boundary surfaces of the first to third surfaces of the forming pin are filleted.

10. The forming apparatus according to claim 8,
wherein the third surface of the forming pin includes:
a first extension portion extending from the first surface toward the second surface;
a second extension portion extending from the first extension portion toward the second surface with a steeper slope than the first extension portion with respect to the first surface; and
a third extension portion extending from the second extension portion and connected to the second surface, and
wherein at least a part of the first to third extension portions includes a curved surface.

11. The forming apparatus according to claim 6,
wherein the rotation unit further includes a lower roller disposed under the electrode assembly.

12. The forming apparatus according to claim 6, further comprising:
a pressing unit spaced apart from the rotation unit in said direction and configured to press the electrode assembly,
wherein the pressing unit includes:
a first press plate facing the first foil tab and moving in a direction toward or away from the first foil tab; and
a first core pin disposed on the first press plate and protruding toward a center of the first foil tab.

13. The forming apparatus according to claim 12,
wherein the pressing unit further includes:
a second press plate facing the second foil tab and moving in a direction toward or away from the second foil tab; and
a second core pin disposed on the second press plate and protruding toward a center of the second foil tab.

14. The forming apparatus according to claim 13,
wherein the first and second press plates press the first and second foil tabs in a length direction of the electrode assembly.

15. The forming apparatus according to claim 13,
wherein the first and second core pins shape central portions of the first and second foil tabs.
